(19) Europäisches Patentamt
European Patent Office
Office européen des brevets

(11) EP 0 732 684 A2

(12) EUROPÄISCHE PATENTANMELDUNG

(43) Veröffentlichungstag:
18.09.1996 Patentblatt 1996/38

(51) Int. Cl.⁶: **G10K 11/168**

(21) Anmeldenummer: 96102425.4

(22) Anmeldetag: 17.02.1996

(84) Benannte Vertragsstaaten:
**CH DE ES FR GB IT LI NL SE**

(30) Priorität: **16.03.1995 CH 753/95**

(71) Anmelder: **RIETER AUTOMOTIVE (INTERNATIONAL) AG**
**CH-8702 Zollikon (CH)**

(72) Erfinder: **Alts, Thorsten**
**D-64401 Gross-Bieberau (DE)**

(74) Vertreter: **Ritscher, Thomas, Dr. et al**
**RITSCHER & SEIFERT**
**Patentanwälte VSP**
**Kreuzstrasse 82**
**8032 Zürich (CH)**

(54) **Schallabsorber-Element**

(57) Bei einem Schallabsorber-Element (1) mit einer flächigen schalldämpfenden Schicht (2) aus einem porösen, schallabsorbierenden Material, welche Schicht (2) zumindest auf einer Seite vollständig von einer Metallfolie (4, 7) bedeckt ist, wird eine Reinigung mit beliebigen Reinigungsverfahren dadurch ermöglicht, dass die Metallfolie (4, 7) aus einem Edelstahl besteht.

Besonders günstig sind die dämpfenden Eigenschaften, wenn die Metallfolien (4, 7) und die schalldämpfende Schicht (2) miteinander an lokalisierten, einzelnen Klebestellen (10) teilverklebt sind, und insbesondere die schalldämpfende Schicht (2) dazu eine Oberflächenstruktur in Form von seitlich offenen stegförmigen und/oder protrusionsartigen Erhebungen besitzt.

FIG.2

EP 0 732 684 A2

**Beschreibung**

Die vorliegende Erfindung bezieht sich auf das Gebiet des Schallschutzes. Sie betrifft ein Schallabsorber-Element, umfassend eine flächige schalldämpfende Schicht aus einem porösen, schallabsorbierenden Material, welche Schicht zumindest auf einer Seite vollständig von einer Metallfolie bedeckt ist.

Ein solches Schallabsorber-Element ist z.B. aus der Deutschen Patentschrift DE-C2-34 08 411 bekannt.

Für die Schalldämmung in Gebäuden, beispielsweise in Produktionshallen oder Wohn- und Geschäftsräumen, oder an schallerzeugenden Maschinen gibt es eine Vielzahl von technischen Lösungen, bei denen entweder auf Wände und Decken oder Gehäuse schallabsorbierende Schichten wie z.B. ein Dämmputz oder dgl. aufgetragen werden, oder an den entsprechenden Flächen separate Schallabsorber-Elemente annebracht werden.

Die Schallabsorption, d.h. die Umwandlung von Schallenergie in eine andere (üblicherweise thermische) Energieform, kann dabei prinzipiell auf zwei verschiedenen Wegen erfolgen (siehe den Artikel von F. Mechel et al. in ACUSTICA, Vol.47 (1981), S.83-88:

(1) Das Schallfeld dringt in die Poren eines porösen Absorbers ein und die Geschwindigkeit der Luftteilchen wird infolge Reibung an den Porenwänden gedämpft, wodurch es zu einer Energiedissipation kommt.

(2) Das Schallfeld regt eine Platte zu Biegeschwingungen an. Diese Schwingungen werden durch innere Reibung gedämpft, was wiederum zu einer Dissipation der Schallenergie führt.

Absorber der ersten Art sind die üblichen Dämmplatten aus dicklagigem Faser- oder Schaummaterial, die zum Schutz vor mechanischer Beschädigung wie z.B. Abrieb, oder zum Schutz vor Verschmutzung der Poren mit einer biegefähigen, relativ dünnen Kunststofffolie oder Metallfolie aus Al abgedeckt bzw. beklebt sein können (siehe die eingangs genannte DE-C2-34 08 411). Diese Absorber weisen nicht zuletzt wegen der ca. 0,5 mm dicken Folie eine schmalbandige Resonanzabsorption auf.

Absorber der zweiten Art, die auch unter der Bezeichnung Folienabsorber bekannt sind, bestehen üblicherweise aus einer Folie oder dünnen Platte aus Kunststoff, die durch Tiefziehen oder ein anderes Verfahren so strukturiert worden ist, dass sich bei Anregung durch Schallwellen in ihr bestimmte Biegeschwingungen ausbilden (siehe den o.g. Artikel von F. Mechel oder die CH-A5-626 936), die dann im Material selbst gedämpft werden.

Es sind weiterhin Absorberstrukturen bekannt (EP-B1-0 013 513), bei denen ein dünnes perforiertes Blech aus Stahl oder Aluminium mit einer Kunststofffolie verklebt wird, wobei durch zwischengelegte Abstandhalter zellenförmige Hohlräume erzeugt werden, die der Schallabsorption dienen. Bei anderen Absorberstrukturen (EP-B1-0 023 618) ist eine schallschluckende Schicht auf ein gelochtes Trägerblech aufgebracht.

Für spezielle Anwendungen, z.B. in der Lebensmittelindustrie, werden Schallabsorber benötigt, die hohen hygienischen Anforderungen genügen, keine Fremdstoffe abgeben, und auf die unterschiedlichste Art und Weise, insbesondere mit Reinigungsmitteln, Säuren, Laugen, Peroxyden, Heissdampf oder Wasserdruckstrahlen, gereinigt werden können, ohne dass die Absorber-Elemente angegriffen werden oder Reinigungsmittel in sich aufnehmen und zusetzen. Weder ungeschützte poröse Absorberschichten noch solche Schichten, die mit einer perforierten Folie oder einem perforierten Blech kombiniert sind, erfüllen diese Anforderungen, weil bei der Reinigung das Absorbermaterial den Reinigungsmitteln mehr oder weniger direkt ausgesetzt ist. Aber auch poröse Absorberschichten, die mit einer durchgehenden Kunststoff- oder Aluminiumfolie abgedeckt sind, können nicht beliebig gereinigt werden, weil diese Folien von ihrem Material her bestimmten chemischen und mechanischen Belastungen nicht gewachsen sind. Die mit dickeren Kunststofffolien ausgestatteten Folienabsorber, wie sie in dem o.g. Artikel von F. Mechel beschrieben worden sind, eignen sich noch am ehesten für den Einsatz in Räumen mit hohen Hygieneanforderungen. Gleichwohl setzt auch hier die Verwendung des Kunststoffs den Reinigungsmöglichkeiten Grenzen. Darüber hinaus ist die starke Strukturierung der Folien im Hinblick auf die Reinigung eher nachteilig, weil sich in den Vertiefungen leicht Rückstände absetzten können.

Die Absorptionswirkung dieser Folienabsorber ist ebenfalls auf einen engen Frequenzbereich begrenzt.

Es ist daher Aufgabe der Erfindung, ein Schallabsorber-Element zu schaffen, welches einerseits über einen weiten Frequenzbereich eine gute Schalldämpfung aufweist, und andererseits mit beliebigen Reinigungsverfahren sicher und ohne bleibende Veränderung des Absorbers gereinigt werden kann.

Die Aufgabe wird bei einem Schallabsorber-Element der eingangs genannten Art dadurch gelöst, dass die Metallfolie aus einem Edelstahl besteht. Durch die Kombination aus schalldämpfender poröser Schicht und einer Abdeckung aus einer Edelstahlfolie mit vergleichsweise hoher Dichte, d.h. hoher Reissfestigkeit, und mit sehr geringer Dicke, resp. einem sehr geringen Flächengewicht kann sowohl nach theoretischen Berechnungen als auch nach experimentellen Ergebnissen überraschenderweise ein Absorber aufgebaut werden, der nicht nur über einen weiten Frequenzbereich ein hohes Absorptionsvermögen zeigt, sondern auch gegen äussere Einflüsse praktisch unempfindlich ist. Die Edelstahlfolie übernimmt dabei nicht nur die Funktion einer schützenden Aodeckung, sondern bildet zusammen mit der schalldämpfenden Schicht ein komplexes akustisch wirksames Gebilde, dessen Eigenschaften von den verschiedenen Parameter der Gesamtstruktur abhängen.

Eine erste bevorzugte Ausführungsform des erfindungsgemässen Schallabsorber-Elements zeichnet sich dadurch aus, dass die schalldämpfende Schicht auf beiden Seiten mit einer Metallfolie aus Edelstahl bedeckt ist, und dass die Metallfolien randseitig so miteinander verbunden sind, dass die schalldämpfende Schicht nach aussen hin dicht umschlossen ist. Hierdurch wird erreicht, dass die innenliegende schalldämpfende Schicht sicher gegen alle Umwelteinflüsse geschützt ist und praktisch weder von aussen etwas aufnimmt, noch nach aussen etwas abgibt.

Eine zweite Ausführungsform ist dadurch gekennzeichnet, dass die Metallfolie(n) auf die schalldämpfende Schicht lose aufgelegt ist (sind). Das lose Auflegen der Metallfolie führt dazu, dass zwischen Metallfolie und schalldämpfender Schicht jeweils eine dünne Luftschicht vorhanden ist. Hierdurch wird bei mittleren Frequenzen (etwa 500 Hz bis 2000 Hz) eine sehr hohe Absorption erzielt.

Bei einer dritten Ausführungsform ist (sind) die Metallfolie(n) auf die schalldämpfende Schicht ganzflächig aufgeklebt. Durch die flächige Verklebung wird die Absorption im Bereich mittlerer Frequenzen auf ein weitgehend konstantes Niveau abgeflacht und gegenüber dem unverklebten Zustand verringert. Andererseits wird die Absorption für tiefe und hohe Frequenzen jedoch erhöht, so dass sich ein erweiterter Frequenzbereich bei insgesamt geringerer Maximalabsorption ergibt.

Eine weitere, besonders bevorzugte Ausführungsform zeichnet sich dadurch aus, dass die Metallfolie(n) mit der schalldämpfenden Schicht an verteilt angeordneten, lokalen Klebestellen verklebt ist (sind), und dass zwischen den Klebestellen luftgefüllte Hohlräume zwischen der schalldämpfenden Schicht und der jeweiligen Metallfolie vorhanden sind. Hierdurch wird ein System geschaffen, das in seinen Absorbereigenschaften zwischen dem ganzflächig verklebten und dem lose aufgelegten System liegt, also relativ breitbandig absorbiert und gleichzeitig eine vergleichsweise hohe maximale Absorption aufweist.

Die Metallfolie hat vorzugsweise eine Dicke von $\leq$ 20 μm, insbesondere $\leq$ 10 μm. Die schallabsorbierende Schicht hat vorzugsweise eine Dicke zwischen 5 und 50 mm, insbesondere zwischen 20 und 40 mm. Der längenspezifische Strömungswiderstand der schalldämpfenden Schicht beträgt vorzugsweise zwischen 15.000 und 75.000 Ns/m$^4$, insbesondere etwa 45.000 Ns/m$^4$. Der Kompressionsmodul der schalldämpfenden Schicht beträgt vorzugsweise zwischen 5.000 und 20.000 N/m$^2$, insbesondere zwischen 10.000 und 15.000 N/m$^2$.

Weitere Ausführungsformen ergeben sich aus den abhängigen Ansprüchen.

Die Erfindung soll nachfolgend anhand von Ausführungsbeispielen im Zusammenhang mit der Zeichnung näher erläutert werden. Es zeigen

Fig. 1    im Schnitt verschiedene Ausführungsbeispiele für ein Schallabsorber-Element nach der Erfindung mit einseitig aufgelegter (a) und verklebter (b) und beidseitig aufgelegter (c) und verklebter (d) Metallfolie;

Fig. 2    im Schnitt den Aufbau eines Schallabsorber-Elements nach der Erfindung mit teilweise verklebten Folien;

Fig. 3    verschiedene Ausführungsbeispiele für den randseitigen Ahschluss bei einem Schallabsorber-Element nach der Erfindung;

Fig. 4    ein Ausführungsbeispiel für eine Deckenbefestigung von Schallabsorber-Elementen nach der Erfindung: und

Fig. 5-14    den theoretisch berechneten Verlauf des Absorptionskoeffizienten als Funktion der Frequenz bei diffusem Schalleinfall und unterschiedlichen Parametern für eine Konfiguration nach Fig. ld (Fig. 5, 7, 9, 11 und 13) und für eine Konfiguration nach Fig. lc (Fig. 6, 8, 10, 12 und 14).

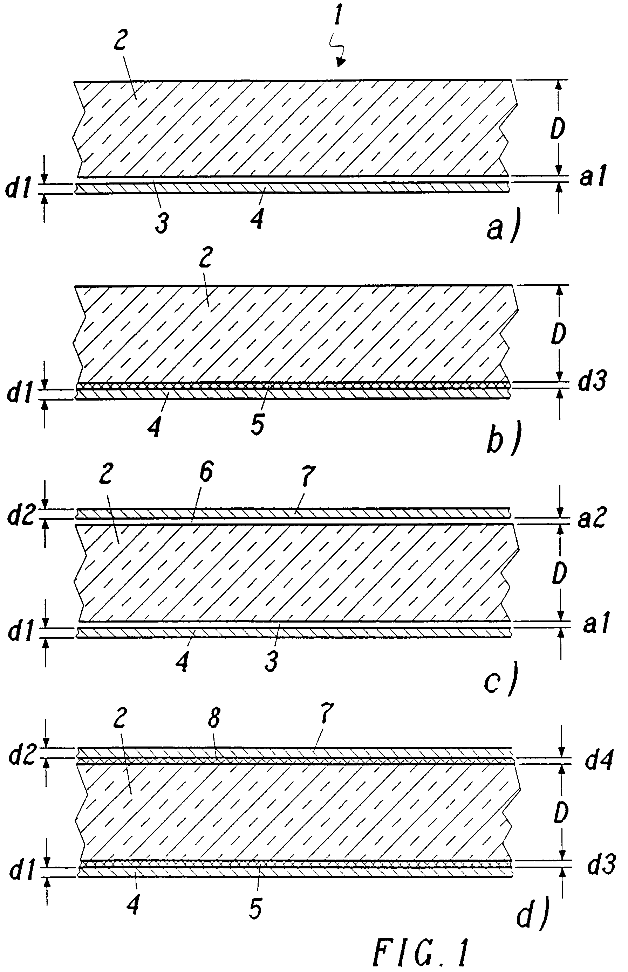

Verschiedene Ausführungsbeispiele für ein Schallabsorber-Element nach der Erfindung sind in Fig. 1 dargestellt. Das Schallabsorber-Element 1 umfasst in der einfachsten Ausführung (Fig. la) eine relativ dicke (5 mm $\leq$ D $\leq$ 50 mm) schalldämpfende Schicht 2 aus einem porösen, beispielsweise geschäumten oder faserigen Material, die zumindest auf der einen Seite von einer Metallfolie 4 aus Edelstahl vollständig abgedeckt ist. Die abgedeckte Seite bildet zugleich die Aussenseite des Elements, die bei der Montage zum Rauminneren hin orientiert ist und im Falle einer Reinigung mit dem Reinigungsmittel beaufschlagt wird. Im Beispiel der Fig. la ist die Metallfolie 4 lose auf die schalldämpfende Schicht 2 aufgelegt und hat entsprechend von der schalldämpfenden Schicht 2 einen endlichen Abstand al, der durch eine Luftschicht 3 ausgefüllt ist. Schalldämpfende Schicht 2 und Metallfolie 4 bilden zusammen mit der Luftschicht 3 ein akustisches System, bei dem sowohl die Metallfolie 4 selbst schwingt, als auch die Luft in der Luftschicht 3 und in den Poren der schalldämpfenden Schicht 2. Die Dicke dl der Metallfolie 4 liegt dabei vorzugsweise in einem Bereich von $\leq$ 20 μm, insbesondere $\leq$ 10 μm. Der Abstand al liegt in der Grössenordnung von 0,5 mm. Die Dicke D der schalldämpfenden Schicht 2 beträgt vorzugsweise zwischen 5 und 50 mm, insbesondere zwischen 20 und 40 mm.

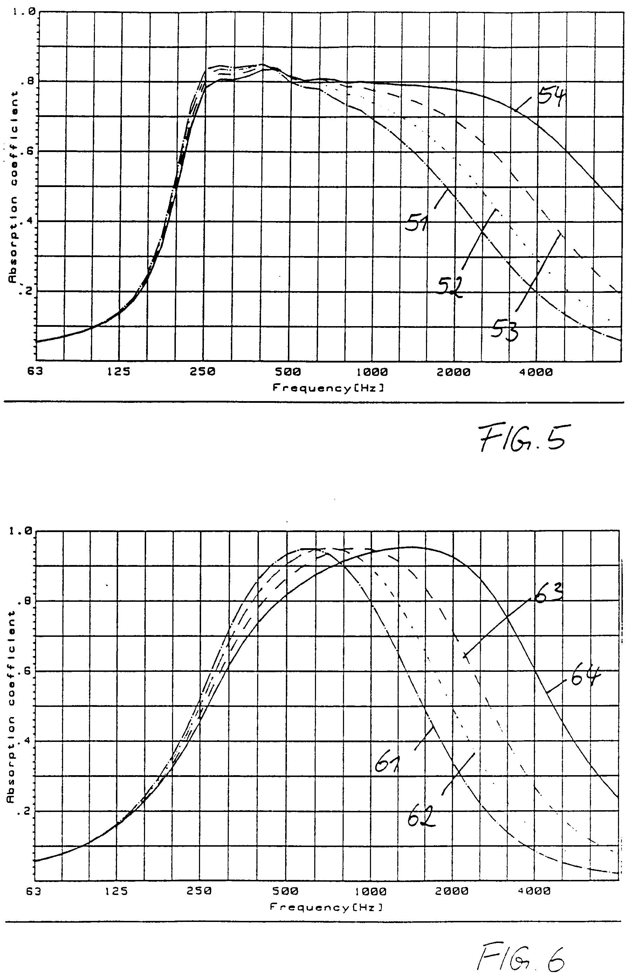

Wie die weiter unten im Zusammenhang mit den Fig. 5-14 diskutierten theoretischen Berechnungen zeigen, führt das lose Auflegen der Metallfolie 4 mit der zwischenliegenden Luftschicht 3 zu einem Absorptionsverhalten, bei dem in einem mittleren Frequenzbereich (etwa 500 Hz bis 2000 Hz) eine relativ hohe Absorption erreicht wird, während bei höheren und tieferen Frequenzen die Absorption vergleichsweise schnell abfällt. Eine Abschwächung der Absorption im mittleren Frequenzbereich bei gleichzeitiger Verbesserung der Absorption für tiefe und hohe Frequenzen wird erreicht, wenn gemäss Fig. lb die Metallfolie 4 mittels einer Kleberschicht 5 der Dicke d3 ganzflächig auf die schalldämpfende Schicht 2 aufgeklebt wird.

Bei einer Konfiguration gemäss Fig. la und lb ist das Schallabsorber-Element nur einseitig bedeckt und damit geschützt, sodass es bei unsachgemässem Einbau zu Verunreinigungen und Beschädigungen kommen kann. Solche Nachteile werden sicher vermieden, wenn gemäss Fig. lc oder ld die schalldämpfende Schicht 2 beidseitig mit Metallfolien 4 und 7 der Dicken dl und d2 abgedeckt wird, wobei die Metallfolien 4, 7 entweder mit Abständen al bzw. a2 und entsprechenden Luftschichten 3 und 6 lose aufgelegt sein können (Fig. lc) oder mit der schalldämpfenden Schicht 2 mittels Kleberschichten 5 und 8 der Dicken d3 bzw. d4 fest und ganzflächig verklebt sind.

Für die in Fig. lc und ld wiedergegebenen Konfigurationen ist der Absorptionskoeffizient als Funktion der Frequenz bei diffusem Schalleinfall für unterschiedliche Konfigurationsparameter theoretisch berechnet worden. Die Ergebnisse dieser Berechnungen, die einen Hinweis auf die günstigste Wahl der Parameter geben, sind in den Fig. 5 bis 14 dargestellt; es wird dabei angenommen, dass das Element gemäss Fig. lc bzw. ld auf einem schallharten Boden mit einer Zwischen-Luftschicht von 0,2 mm Dicke liegt.

Die Darstellung in Fig. 5 zeigt 4 verschiedene Kurven 51, 52, 53 und 54 des Absorptionskoeffizienten für eine Element gemäss Fig. ld mit zwei ganzflächig verklebten Edelstahlfolien. Die schalldämpfende Schicht 2 hat dabei eine Dicke $D = 40$ mm, eine Dichte von 50 kg/m$^3$, einen längenspezifischen Strömungswiderstand von 45.000 Ns/m$^4$ und ein Kompressionsmodul (des Schaumskeletts) von $K_s = 20.000$ N/m$^2$. Variiert wird hier die Dicke (dl, d2) der Metallfolien 4, 7 bzw. deren Flächengewicht. Für die Kurve 51 sind die Dicken dl, d2 jeweils 20 μm (entspricht bei der Dichte von Stahl $\rho_{st} = 7.900$ kg/m$^3$ einem Flächengewicht von $m_F = 158,0$ g/m$^2$), für die Kurve 52 ist $dl = d2 = 15$ μm ($m_F = 118,5$ g/m$^2$), für die Kurve 53 ist $dl = d2 = 10$ μm ($m_F = 79,0$ g/m$^2$), und für die Kurve 54 ist $dl = d2 = 5$ μm ($m_F = 39,5$ g/m$^2$).

Die Darstellung in Fig. 6 zeigt mit den Kurven 61 bis 64 die analogen Ergebnisse (für die Dicken 20, 15, 10 und 5 μm) für lose aufgelegte Folien gemäss Fig. lc mit Abständen al und a2 von 0,5 mm. An den Rechenergebnissen ist deutlich abzulesen, dass für das Schallabsorber-Element 1 nach der Erfindung die Absorption auf einen Frequenzbereich konzentriert ist, der bei etwa 125 Hz beginnt und sich sowohl im aufgelegten als auch verklebten Fall zu umso höheren Frequenzen erstreckt, je dünner die Metallfolien 4, 7 gewählt werden. Eine untere Grenze der Dicke ist dabei hauptsächlich durch die Herstellbarkeit der Edelstahlfolie gegeben. Wie die Fig. 5 und 6 im Vergleich zeigen, führt eine Verklebung (Fig. 5) zu einer verringerten Absorption bei mittleren Frequenzen, der Kernbereich der Absorption wird jedoch vor allem zu tieferen ($\leqq 300$ Hz) und auch höheren ($\geqq 4000$ Hz) Frequenzen hin erweitert.

Ein loses Auflegen dagegen (Fig. 6) erhöht die maximale Absorption bei mittleren Frequenzen, vernachlässigt jedoch die tieferen und höheren Frequenzen.

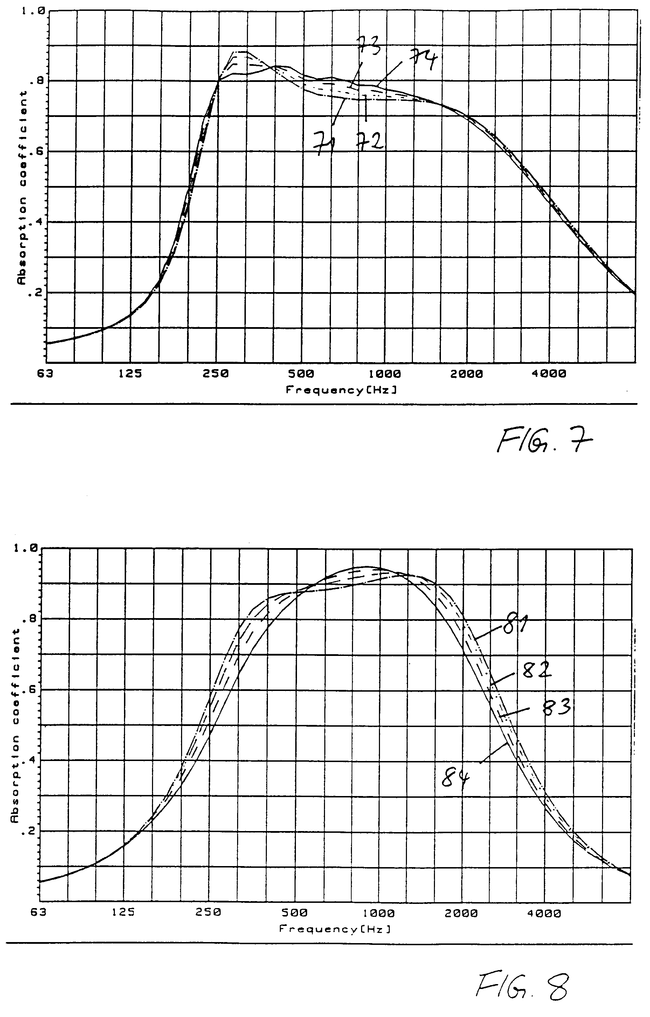

Fig. 7 und 8 zeigen gleichfalls Ergebnisse für verklebte bzw. lose aufgelegte Metallfolien 4, 7. Die Metallfolien haben hier eine feste Dicke von 10 μm. Variiert wird hier als Parameter der längenspezifische Strömungswiderstand der schalldämpfenden Schicht 2, und zwar von einem Wert von $R = 75.000$ Ns/m$^4$ (Kurven 71, 81) über $R = 65.000$ Ns/m$^4$ (Kurven 72, 82) und $R = 55.000$ Ns/m$^4$ (Kurven 73, 83) bis zu $R = 45.000$ Ns/m$^4$ (Kurven 74, 84). Man erkennt beim Vergleich der Figuren, dass für verklebte Folien (Fig. 7) die Absorption für den kleinsten Strömungswiderstand (Kurve 74) am gleichmässigsten in den mittleren Frequenzen ist, während bei lose aufgelegten Folien (Fig. 8) die Absorption beim grössten Strömungswiderstand (Kurve 81) sich am weitesten zu kleinen und hohen Frequenzen hin erstreckt.

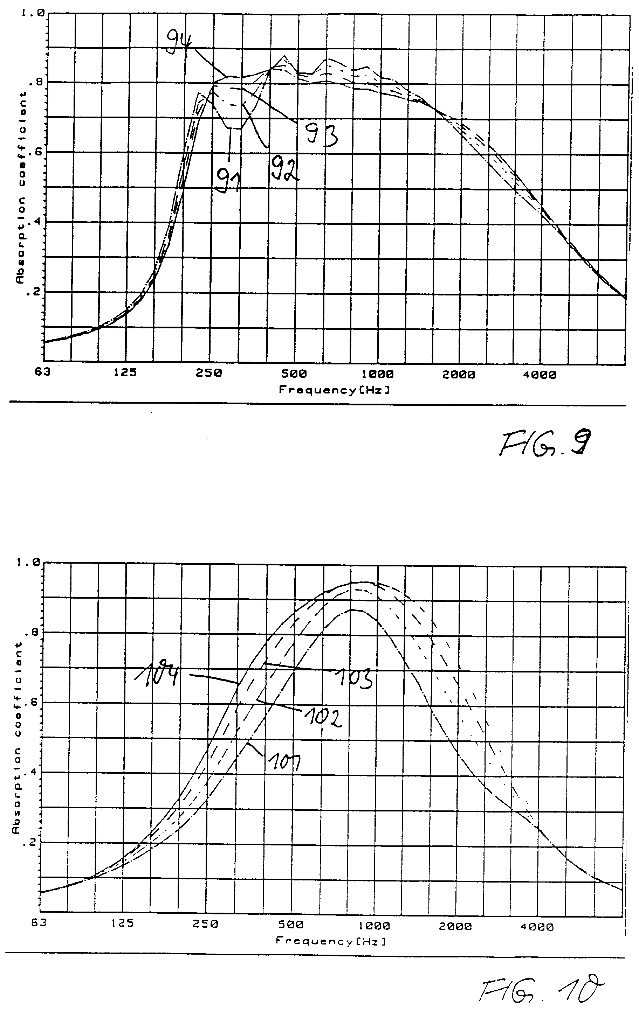

Fig. 9 und 10 zeigen wiederum Ergebnisse für verklebte bzw. lose aufgelegte Folien. Hier ist der längenspezifische Strömungswiderstand zu kleineren Werten hin variiert (Kurven 91, 101: $R = 15.000$ Ns/m$^4$; Kurven 92, 102: $R = 25.000$ Ns/m$^4$; Kurven 93, 103: $R = 35.000$ Ns/m$^4$; Kurven 94, 104: $R = 45.000$ Ns/m$^4$). Der Vergleich der Fig. 7 bis 10 zeigt, dass ein Strömungswiderstand von $R = 45.000$ Ns/m$^4$ für die schalldämpfende Schicht 2 in den meisten Fällen als besonders günstig angesehen werden muss.

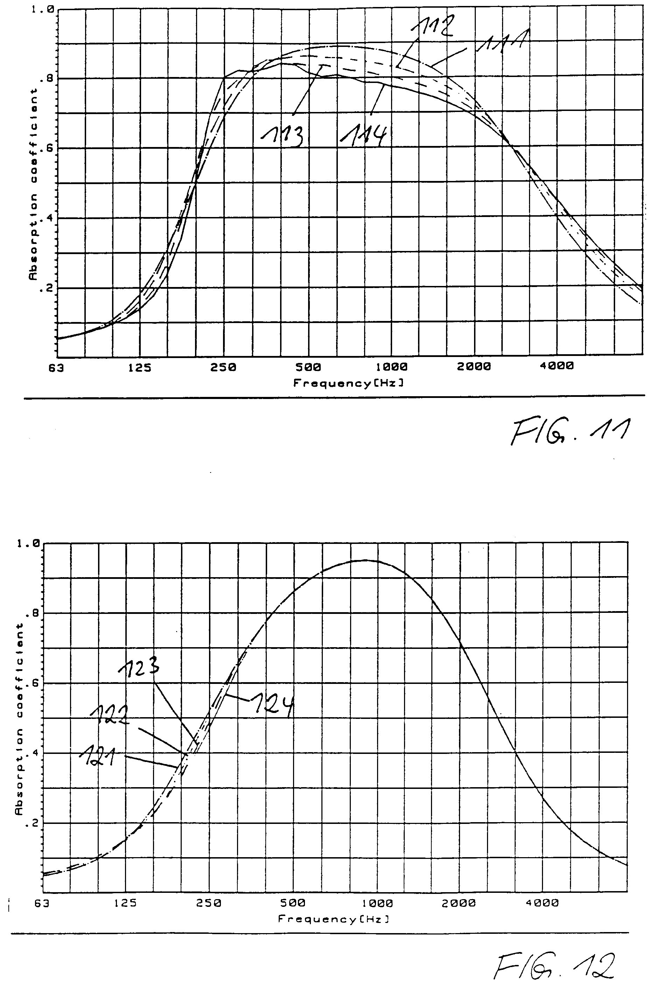

Bei den Berechnungen der Figuren 11 (verklebt) und 12 (lose aufgelegt) ist als Parameter der Kompressionsmodul $K_s$ des Schaum- resp. Faserskeletts (der schalldämpfenden Schicht 2) variiert. Bei sonst gleichen Parametern ist $K_s = 5.000$ N/m$^2$ für die Kurven 111, 121, $K_s = 10.000$ N/m$^2$ für die Kurven 112, 122, $K_s = 15.000$ N/m$^2$ für die Kurven 113, 123 und $K_s = 20.000$ N/m$^2$ für die Kurven 114, 124. Bei lose aufgelegten Metallfolien 4, 7 (Fig. 12) hat der Kompressionsmodul nur einen geringen Einfluss. Bei verklebten Metallfolien (Fig. 11) wäre ein Kompressionsmodul von 10.000 bis 15.000 N/m$^2$ besonders günstig.

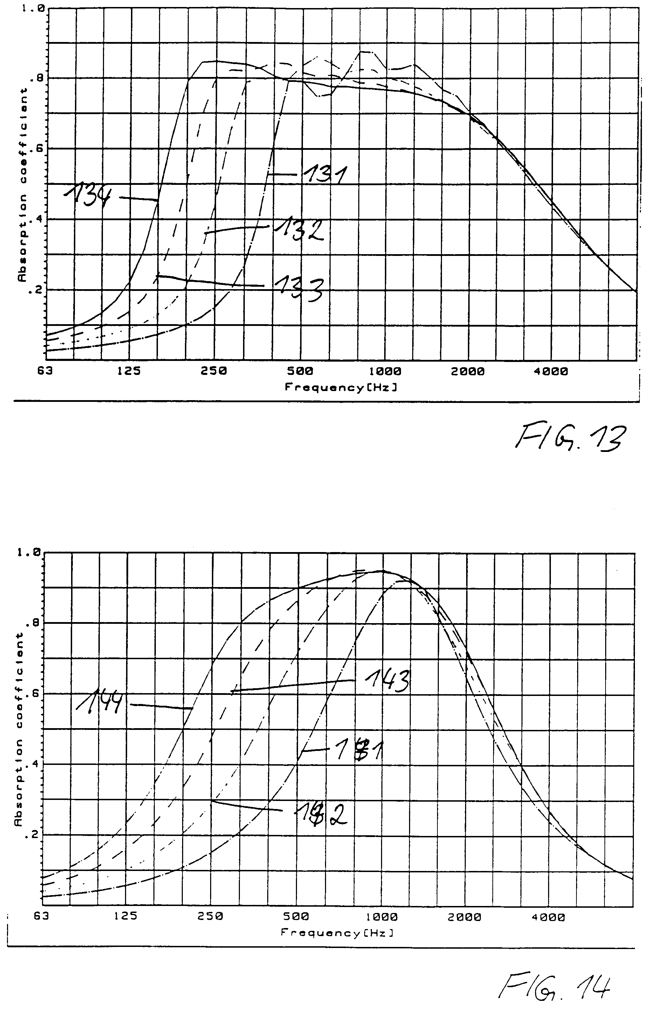

Bei den Figuren 13 (verklebt) und 14 (lose aufgelegt) ist die Dicke D der schalldämpfenden Schicht 2 variiert. Für die Kurven 131, 141 ist $D = 20$ mm, für die Kurven 132, 142 ist $D = 30$ mm, für die Kurven 133, 143 ist $D = 40$ mm, und für die Kurven 134, 144 ist $D = 50$ mm. Aus beiden Kurvenscharen lässt sich ersehen, dass eine Vergrösserung der Dicke D den Absorptionsbereich zu tieferen Frequenzen hin erweitert.

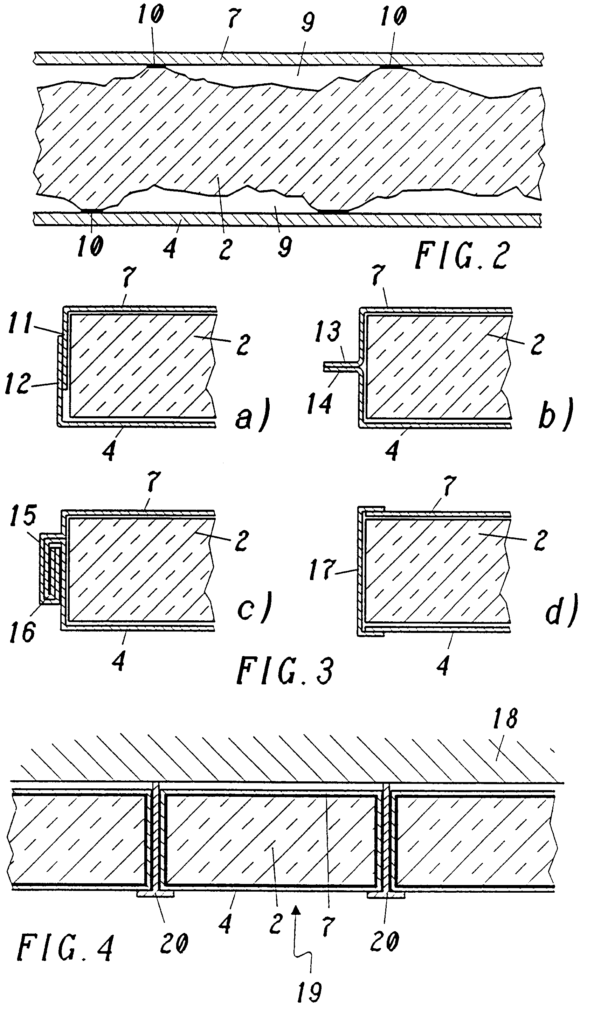

Aus allen Berechnungen, deren Ergebnisse in den Fig. 5 bis 14 wiedergegeben sind, geht hervor, dass sowohl die ganzflächige Verklebung der Metallfolien als auch deren lose Auflage Vor- und Nachteile in bestimmten Frequenzbereichen aufweisen. Um zwischen beiden Extremfällen eine für die Praxis besonders günstige Lösung zu finden, wird bevorzugt eine Teilverklebung zwischen den Metallfolien 4, 7 und der schalldämpfenden Schicht 2 angestrebt. Bei einer solchen Teilverklebung sind die Metallfolien 4, 7 mit der schalldämpfenden Schicht 2 an verteilt angeordneten, lokalen Klebestellen 10 verklebt (Fig. 2). Zwischen den Klebestellen 10 sind luftgefüllte Hohlräume 9 zwischen der schalldämpfenden Schicht 2 und der jeweiligen Metallfolie (4 bzw. 7) vorhanden. Die Teilverklebung kann - wie in Fig. 2 übertrieben dargestellt ist - dadurch erreicht werden, dass die Oberfläche der schalldämpfenden Schicht 2 uneben ausgebildet wird resp. eine regelmässige Oberflächenstruktur in Form von seitlich offenen Stegen oder lokalen protrusionsartigen Erhebungen besitzt. Es ist aber auch denkbar, gezielt in den Metallfolien 4, 7 lokale Einprägungen vorzusehen, mit denen die Folien dann auf einer an sich ebenen Oberfläche der Schicht 2 lokal aufliegen.

In den bisher erläuterten Figuren 1 und 2 ist nur der generelle Schichtaufbau eines Schallabsorptions-Elementes nach der Erfindung wiedergegeben. Wichtig für eine ordnungsgemässe Funktion ist jedoch auch der Randbereich eines solchen Elementes. Insbesondere ist es wünschenswert, die empfindliche schalldämpfende Schicht 2 allseitig mit Metallfolien zu umschliessen, so dass unter keinen Umständen Reinigungsmittel in die Schicht 2 gelangt, oder Schichtmaterial nach aussen abgegeben werden kann. In der Fig. 3 sind nun verschiedene Möglichkeiten dargestellt, wie ein zweiseitig mit Metallfolien 4, 7 bedecktes Element am Rand dicht verschlossen werden kann. Beim Ausführungsbeispiel der Fig. 3a ragen die Metallfolien 4, 7 mit Laschen 11 bzw. 12 über den Rand der Schicht 2 hinaus. Die Laschen 11, 12 sind nach innen umgebogen und überlappend aufeinandergelegt, insbesondere verklebt. Beim Ausführungsbeispiel der Fig. 3b sind die Laschen 13, 14 gegeneinander geklebt und bilden eine umlaufende Randnaht. Hier ist es besonders einfach, die Klebung maschinell durchzuführen. Es ist aber auch denkbar, gemäss Fig. 3c die Laschen 15, 16 länger auszubilden und in Form eines Falzes miteinander zu verbinden. Eine weitere Möglichkeit besteht darin , die Metallfolien 4, 7 am Rand der Schicht 2 enden zu lassen und den Rand mit einer beidseitig überlappenden Randleiste 17 abzudichten. Selbstverständlich sind im Rahmen der Erfindung für den Fachmann auch noch andere Arten der randseitigen Abdichtung, insbesondere jede Form von Verschmelzungen, denkbar. Dabei lassen sich auch andere Edelmetalle, wie bspw. Gold-, Platin- oder Titanfolien verwenden, solange diese genügend dünn ausgebildet sind.

Für die Anwendung besonders günstig ist es, wenn die Schallabsorber-Elemente nach der Erfindung in Form von allseitig mit Metallfolien umschlossenen, genormten Absorberblöcken 19 (Fig. 4) gefertigt werden. Derartige Absorberblöcke 19 können dann besonders einfach (beispielsweise bei der Montage an einer Decke 18) in vorbereitete Kanäle eingeschoben werden, die durch gleichmässig beabstandete Trageelemente 20 gebildet werden. Der Zwischenraum zwischen den einzelnen Absorberblöcken 19 sollte dabei so gering wie möglich gehalten werden, um eine möglichst vollflächige Schalldämpfung zu erzielen.

Insgesamt ergibt sich mit der Erfindung ein Schallabsorber-Element, welches einfach aufgebaut ist und hergestellt werden kann, welches ein hohes Dämpfungsvermögen über einen grossen Frequenzbereich aufweist, und welches sich mit beliebigen Reinigungsmethoden sicher und ohne Beeinträchtigung der Funktion reinigen lässt.

## Patentansprüche

1. Schallabsorber-Element (1), umfassend eine flächige schalldämpfende Schicht (2) aus einem porösen, schallabsorbierenden Material, welche Schicht (2) zumindest auf einer Seite vollständig von einer Metallfolie (4, 7) bedeckt ist, dadurch gekennzeichnet, dass die Metallfolie (4, 7) aus einem Edelstahl besteht.

2. Schallabsorber-Element nach Anspruch 1, dadurch gekennzeichnet, dass die schalldämpfende Schicht (2) auf beiden Seiten mit einer Metallfolie (4, 7) aus Edelstahl bedeckt ist.

3. Schallabsorber-Element nach einem der Ansprüche 1 und 2, dadurch gekennzeichnet, dass die Metallfolie(n) (4, auf die schalldämpfende Schicht (2) lose aufgelegt ist (sind).

4. Schallabsorber-Element nach einem der Ansprüche 1 und 2, dadurch gekennzeichnet, dass die Metallfolie(n) (4, 7) auf die schalldämpfende Schicht (2) ganzflächig aufgeklebt ist (sind).

5. Schallabsorber-Element nach einem der Ansprüche 1 und 2, dadurch gekennzeichnet, dass die Metallfolie(n) (4, 7) mit der schalldämpfenden Schicht (2) an verteilt angeordneten, lokalen Klebestellen (10) verklebt ist (sind), und dass zwischen den Klebestellen (10) luftgefüllte Hohlräume (9) zwischen der schalldämpfenden Schicht (2) und der jeweiligen Metallfolie (4 bzw. 7) vorhanden sind.

6. Schallabsorber-Element nach Anspruch 5, dadurch gekennzeichnet, dass die lokalen Klebstellen (10) auf steg- und/oder protrusionsartigen Erhebungen liegen.

7. Schallabsorber-Element nach Anspruch 6, dadurch gekennzeichnet, dass die steg- und/oder protrusionsartigen Erhebungen seitlich offene Oberflächenstrukturen der schalldämpfenden Schicht (2) sind.

8. Schallabsorber-Element nach Anspruch 2, dadurch gekennzeichnet, dass die Metallfolien (4, 7) randseitig so miteinander verbunden sind, dass die schalldämpfende Schicht (2) nach aussen hin dicht umschlossen ist.

9. Schallabsorber-Element nach Anspruch 8, dadurch gekennzeichnet, dass die Metallfolien (4, 7) mit Laschen (11, 12; 13, 14; 15, 16) über den Rand der schalldämpfenden Schicht (2) hinausragen, und dass die entsprechenden Laschen (11, 12 bzw. 13, 14 bzw. 15, 16) der Metallfolien (4, 7) miteinander verbunden, insbesondere verklebt sind.

10. Schallabsorber-Element nach Anspruch 8, dadurch gekennzeichnet, dass der Rand der schalldämpfenden Schicht (2) mit einer separaten Randleiste (17) abgedeckt ist, welche mit den MetallLolien (4, 7) verbunden, insbesondere verklebt ist.

11. Schallabsorber-Element nach einem der Ansprüche 1 bis 10, dadurch gekennzeichnet, dass die Metallfolie (4, 7) eine Dicke (dl, d2) von $\leq$ 20 $\mu$m, vorzugsweise $\leq$ 10 $\mu$m, aufweist.

12. Schallabsorber-Element nach einem der Ansprüche I bis 11, dadurch gekennzeichnet, dass die schallabsorbierende Schicht (2) eine Dicke (D) zwischen 5 und 50 mm, vorzugsweise zwischen 20 und 40 mm, aufweist, dass der längenspezifische Strömungswiderstand der schalldämpfenden Schicht (2) zwischen 15.000 und 75.000 Ns/m$^4$, vorzugsweise etwa 45.000 Ns/m$^4$, beträgt, und dass der Kompressionsmodul der schalldämpfenden Schicht zwischen 5.000 und 20.000 N/m$^2$, vorzugsweise zwischen 10.000 und 15.000 N/m$^2$, beträgt.

13. Schallabsorber-Element nach einem der Ansprüche 1 bis 12, dadurch gekennzeichnet, dass die schalldämpfende Schicht (2) aus einem Kunststoffschaum, vorzugeweise aus einem PU-Schaum mit einer Dichte von etwa 65 kg/m$^3$ besteht und eine Dicke (D) von etwa 40 mm aufweist, und dass die Metallfolie (4, 7) eine Dicke (dl, d2) von 10 $\mu$m und ein Flächengewicht von 0,079 kg/m$^2$ aufweist.

FIG. 1

FIG.2

a)

b)

c)

d)

FIG.3

FIG.4

FIG. 5

FIG. 6

FIG. 7

FIG. 8

FIG. 9

FIG. 10

FIG. 11

FIG. 12

FIG. 13

FIG. 14